(19) Europäisches Patentamt

European Patent Office

Office européen des brevets

(11) EP 1 432 657 B1

(12) EUROPEAN PATENT SPECIFICATION

(45) Date of publication and mention
of the grant of the patent:
**21.06.2006 Bulletin 2006/25**

(51) Int Cl.:
***C03B 37/014*** (2006.01)

(21) Application number: **02763087.0**

(86) International application number:
**PCT/NL2002/000610**

(22) Date of filing: **23.09.2002**

(87) International publication number:
**WO 2003/029158 (10.04.2003 Gazette 2003/15)**

(54) **METHOD AND DEVICE FOR DEPOSITING GLASS LAYERS ON THE EXTERNAL SURFACE OF A ROD-LIKE PREFORM**

VERFAHREN UND VORRICHTUNG ZUR AUSSENABSCHEIDUNG VON GLASSCHICHTEN AUF EINER STABFÖRMIGEN VORFORM

PROCEDE ET DISPOSITIF PERMETTANT DE DEPOSER DES COUCHES DE VERRE SUR LA SURFACE EXTERIEURE D'UNE PREFORME DE TYPE TIGE

(84) Designated Contracting States:
**AT BE BG CH CY CZ DE DK EE ES FI FR GB GR IE IT LI LU MC NL PT SE SK TR**

(30) Priority: **01.10.2001 NL 1019076**

(43) Date of publication of application:
**30.06.2004 Bulletin 2004/27**

(73) Proprietor: **Draka Fibre Technology B.V.**
**5651 CA Eindhoven (NL)**

(72) Inventors:
• **VAN STRALEN, Mattheus, Jacobus, Nicolaas**
**NL-5045 DV Tilburg (NL)**

• **SWARTS, Martinus, Johannus, Marinus, Joseph**
**NL-5508 BK Veldhoven (NL)**

(74) Representative: **Valkonet, Rutger**
**Algemeen Octrooi- en Merkenbureau**
**P.O. Box 645**
**5600 AP Eindhoven (NL)**

(56) References cited:
**EP-A- 0 072 069        GB-A- 2 149 779**
**US-A- 6 138 478**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).

## Description

Method for depositing one or more glass layers on the external surface of a rod-like glass preform, as well as a device suitable for carrying out said method.

The present invention relates to a method for depositing one or more glass layers on the external surface of a rod-like glass preform, which method comprises the steps of:

     i) placing the preform in an enclosed space,
     ii) creating a sub-atmospheric pressure in said enclosed space,
     iii) supplying one or more reactive gases, which may or may not be doped, to the enclosed space,
     iv) generating a plasma zone in said enclosed space, and
     v) letting the reactive gases react with each other in the plasma zone and letting the reaction products deposit on the preform so as to form said one or more glass layers.

The present invention furthermore relates to a device for depositing one or more glass layers on the external surface of a rod-like glass preform, which device comprises an enclosed space, means for creating a sub-atmospheric pressure, means for supplying one or more reactive gases, which may or may not be doped, means for fixing said preform, means for generating a plasma zone and usual supply and discharge pipes.

Such a method is known per se from US patent No 6,138,478. According to the method that is known therefrom, the rod-like preform is placed in an enclosed space, after which a reactive gas is supplied to this space and a plasma zone is developed in the enclosed space. The deposition reaction is carried out in such a manner that a resonator, which generates the plasma zone only locally on the rod-like preform, is reciprocated along the length of the rod-like preform, so that a glass layer is locally deposited on the external surface of the preform with each pass. This manner of plasma generation makes it desirable that a protective gas be supplied to the enclosed space during the deposition reaction in order to prevent glass layers being deposited on the internal wall of the enclosed space as well. A gas consisting of oxygen is supplied as the protective gas, and the pressure of the protective gas being supplied is higher than the pressure of the reactive gas. One drawback of this method is the fact that an electromagnetic field having a maximum field strength on the external surface of the preform is created, whilst said field strength must remain substantially zero in the interior thereof, which imposes limitations as regards the amount of glass material to be deposited on the exterior of the preform. Another drawback is the possible entry of impurities into the enclosed space via the protective gas, which impurities find their way into glass layers deposited on the external surface of the rod-like preform, where they will interfere with the performance of the optical fibres manufactured from the preform.

British patent application GB 2 149 779 A relates to a method for manufacturing optical fibre preforms, in which a so-called perforated inner tube surrounded by a substrate tube is used. A reactive gas mixture is passed through the perforated inner tube, which gas mixture penetrates through the perforations, finding its way into the annular space between the inner tube and the substrate tube, and which subsequently, as a result of the plasma conditions, is deposited on the interior of the substrate tube in the form of glass layers. The plasma is generated from the outside of the substrate tube by means of two microwave generators, which supply energy to so-called microwave cavities formed of an outer cylinder and an inner cylinder.

Consequently it is an object of the present invention to provide a method and a device for depositing one or more glass layers on the external surface of a rod-like glass preform with a high deposition efficiency.

Another object of the present invention is to provide a method and a device for depositing one or more glass layers on the external surface of a rod-like glass preform, in which a very constant thickness and a concentric structure of the glass layers deposited on the external surface of the preform are achieved.

Another object of the present invention is to provide a method and a device for depositing one or more glass layers on the external surface of a rod-like glass preform, in which the refractive index value of the glass layers deposited on the external surface of the preform can be precisely controlled.

Yet another object of the present invention is to provide a method and a device for depositing one or more glass layers on the external surface of a rod-like glass preform, in which it is not necessary to supply a protective gas to the enclosed space.

According to the present invention, the method referred to in the introduction is characterized in that step i) is carried out by fixing the preform between two microwave devices, with the preform functioning as a dielectric guide, and by activating these microwave devices whereby one or more glass layers having a concentric layer structure are formed on the external surface of the preform according to step v), wherein the diameter of the rod-like preform is in accordance with the following equation:

$$D > \frac{C_0}{1{,}706 * f * n_{avg}}$$

wherein:

$C_0 =$      light velocity (m/s),

$n_{avg}$ = average refractive index, and
$f$ = microwave frequency ($s^{-1}$).

According to the present invention, a rod-like glass preform is thus fixed between two microwave devices, which microwave devices generate a plasma zone. Since the rod-like preform functions as a guide for the microwaves, a thin plasma is formed around the external surface of the preform, the intensity of which is substantially constant along the entire length of the preform. In addition to that, the intensity or penetration depth of the plasma is limited. Because the plasma zone extends over the entire preform, in contrast to the method which is known from US patent No 6,138,478, which employs a plasma zone which constantly moves along the length of the preform, glass layers having a constant thickness and a concentric structure are deposited according to the present invention. The formation of standing waves in the rod-like preform is prevented by using two mutually perpendicular polarization modes or two independent microwave devices. Preferably, the wall of the enclosed space is spaced from the rod-like preform by a distance of at least 10 cm.

It is desirable for the intensity of the plasma generated in step iv) to be substantially constant along the entire length of the preform. In addition, it is preferable in specific embodiments for the two microwave devices to be activated alternately so as to couple microwaves into the preform, which preform functions as a dielectric guide.

It is in particular preferred to carry out the present method in such a manner that the deposition of the glass layers in accordance with step v) takes place while the rod-like preform is being rotated. As a result of the rotation of the rod-like preform, the concentric layer structure on the external surface of the preform is still improved.

In specific embodiments it is furthermore desirable to carry out the deposition of the glass layers on the external surface of the preform while rotation of the polarization mode of the microwaves takes place, so as to deposit one or more glass layers having a concentrical layer structure on said external surface of the preform.

A sufficient amount of glass volume, as defined in the above equation, is needed in order to be able to use the rod-like preform as a waveguide. The term average refractive index is to be understood to mean the average refractive index which the microwaves experience in the preform. If the diameter of the preform is smaller than the diameter according to the above formula, microwave guidance is not possible, nor is the formation of plasma without the preform.

The present invention further relates to a device for depositing one or more glass layers on the external surface of a rod-like glass preform, which device is according to the present invention characterized in that the means for generating a plasma zone comprise two microwave devices and in that the rod-like preform is clamped between the two microwave devices at either end, with the preform functioning as a dielectric guide.

It is in particular desirable for the microwave devices to comprise means which maintain the plasma intensity at a substantially constant value along the entire length of the preform. In addition it is possible for the microwave devices to comprise means which activate the microwave devices alternately for the purpose of coupling the microwaves into the preform, which preform functions as a dielectric guide.

It is further preferred that the enclosed space comprises means for rotating the preform.

In a special embodiment, the microwave devices comprise means for rotating the polarization mode. Moreover, in order to prevent the formation of standing waves, each microwave device preferably has its own separate energy source. It should be understood that the microwave devices may be disposed either inside or outside the enclosed space, but that each end of the rod-like preform receives microwave radiation.

The present invention will be explained hereinafter by means of an example, it should be noted, however, that the present invention is not restricted to such an example.

Example.

A rod-like glass preform having an external diameter of 38 mm is clamped between two microwave devices in an enclosed space. The polarization state of the microwaves in one microwave device extends perpendicularly to the polarisation state of the other microwave device. Both microwave devices are connected to the same energy source, with a frequency of 2.45 GHz being used. Subsequently, a sub-atmospheric pressure of 5 - 200 mbar is generated in the enclosed space, after which a low-pressure plasma is created around the rod-like preform. A mixture of silicon tetrachloride and oxygen is supplied to the enclosed space, in which a vacuum has thus been generated, in which enclosed space the silicon tetrachloride will react to form silicon dioxide, which compound is deposited on the external surface of the rod-like preform in the form of a glassy material. After a period of 13 hours, the supply of the reactive gas is stopped, the pressure in the enclosed space is increased from said sub-atmospheric pressure to ambient pressure and the rod-like preform thus treated is removed from said space, which rod-like preform appears to have an external diameter of 76 mm, which diameter has been doubled in comparison with the situation before the deposition.

**Claims**

1. A method for depositing one or more glass layers on the external surface of a rod-like glass preform, which method comprises the steps of:

i) placing the preform in an enclosed space,

ii) creating a sub-atmospheric pressure in said enclosed space,

iii) supplying one or more reactive gases, which may or may not be doped, to the enclosed space,

iv) generating a plasma zone in said enclosed space, and

v) letting the reactive gases react with each other in the plasma zone and letting the reaction products deposit on the preform so as to form said one or more glass layers, **characterized in that**

step i) is carried out by fixing the preform between two microwave devices, with the preform functioning as a dielectric guide, and by activating these microwave devices whereby one or more glass layers having a concentric layer structure are formed on the external surface of the preform according to step v), wherein the diameter of the rod-like glass preform is in accordance with the following equation:

$$D > \frac{C_0}{1{,}706 * f * n_{avg}}$$

wherein:

$C_0$ = light velocity (m/s),
$n_{avg}$ = average refractive index, and
$f$ = microwave frequency (s$^{-1}$).

2. A method according to claim 1, **characterized in that** the two microwave devices are activated alternately so as to couple microwaves into the preform, which preform functions as a dielectric guide.

3. A method according to any one of the preceding claims, **characterized in that** the deposition of the glass layers in accordance with step v) takes place while the preform is being rotated.

4. A method according to any one or more of the preceding claims, **characterized in that** the deposition of the glass layers in accordance with step v) is carried out while rotation of the polarization mode of the microwaves takes place.

5. A method according to any one or more of the preceding claims, **characterized in that** each microwave device is connected to a separate energy source.

6. A device for depositing one or more glass layers on the external surface of a rod-like glass preform, which device comprises an enclosed space, means for creating a sub-atmospheric pressure in this enclosed space, means for supplying one or more reactive gases, which may or may not be doped, means for fixing said preform, means for generating a plasma zone and usual supply and discharge pipes, **characterized in that** the means for generating a plasma zone comprise two microwave devices and **in that** the rod-like preform is clamped between the two microwave devices at either end, with the preform functioning as a dielectric guide.

7. A device according to claim 6, **characterized in that** the microwave devices comprise means which activate the microwave devices alternately for the purpose of coupling the microwaves into the preform, which preform functions as a dielectric guide.

8. A device according to any one or more of the claims 6-7, **characterized in that** the enclosed space comprises means for rotating the preform.

9. A device according to any one or more of the claims 6-8, **characterized in that** the microwave devices comprise means for rotating the polarization mode of the microwaves.

10. A device according to any one or more of the preceding claims, **characterized in that** each microwave device has its own separate energy source.

**Patentansprüche**

1. Verfahren zur Abscheidung einer oder mehrerer Glasschichten der Außenfläche auf einer stabförmigen Glasvorform, wobei das Verfahren die folgenden Schritte aufweist:

i) Anordnen der Vorform in einem abgeschlossenen Raum,

ii) Erzeugen eines Unterdrucks in dem abgeschlossenen Raum,

iii) Zuführen eines oder mehrerer reaktiver Gase, die dotiert oder nicht dotiert sein können, in den abgeschlossenen Raum,

iv) Erzeugen einer Plasmazone in dem abgeschlossenen Raum, und

v) Miteinander-Reagierenlassen der reaktiven Gase in der Plasmazone, und Abscheidenlassen der Reaktionsprodukte auf der Vorform, um die eine oder mehreren Glasschichten zu bilden, **dadurch gekennzeichnet, daß**

der Schritt i) durchgeführt wird, indem die Vorform zwischen zwei Mikrowellenvorrichtungen befestigt wird, wobei die Vorform als eine dielektrische Leitung wirkt, und indem diese Mikrowellenvorrichtungen aktiviert werden, wodurch gemäß Schritt v) eine oder mehrere Glasschichten mit einer konzentrischen Schichtstruktur auf der Außenfläche der Vorform gebildet werden, wobei der Durchmesser der stabförmigen Glasvorform gemäß der folgenden Gleichung ist:

$$D > \frac{C_0}{1,706 * f * n_{mittel}}$$

wobei:

$C_0$ = Lichtgeschwindigkeit (m/s)
$n_{mittel}$ = mittlerer Brechungsindex, und
$f$ = Mikrowellenfrequenz ($s^{-1}$).

2. Verfahren nach Anspruch 1, **dadurch gekennzeichnet, daß** die zwei Mikrowellenvorrichtungen abwechselnd aktiviert werden, um Mikrowellen in der Vorform zu koppeln, wobei die Vorform als eine dielektrische Leitung wirkt.

3. Verfahren nach einem der vorhergehenden Ansprüche, **dadurch gekennzeichnet, daß** die Abscheidung der Glasschichten gemäß Schritt v) stattfindet, während die Vorform gedreht wird.

4. Verfahren nach einem oder mehreren der vorhergehenden Ansprüche, **dadurch gekennzeichnet, daß** die Abscheidung der Glasschichten gemäß Schritt v) durchgeführt wird, während eine Drehung des Polarisationsmode der Mikrowellen stattfindet.

5. Verfahren nach einem oder mehreren der vorhergehenden Ansprüche, **dadurch gekennzeichnet, daß** jedes Mikrowellengerät mit einer getrennten Energiequelle verbunden ist.

6. Vorrichtung zur Abscheidung einer oder mehrerer Glasschichten auf die Außenfläche einer stabförmigen Glasvorform, wobei die Vorrichtung aufweist: einen abgeschlossenen Raum, eine Einrichtung zum Erzeugen eines Unterdrucks in diesem abgeschlossenen Raum, eine Einrichtung zum Zuführen eines oder mehrerer reaktiver Gase, die dotiert oder nicht dotiert sein können, eine Einrichtung zum Befestigen der Vorform, eine Einrichtung zum Erzeugen einer Plasmazone und gewöhnliche Zuführungs- und Ableitungsrohre, **dadurch gekennzeichnet, daß** die Einrichtung zum Erzeugen einer Plasmazone zwei Mikrowellenvorrichtungen an den beiden Enden aufweist und daß die stabförmige Vorform an den beiden Enden zwischen die zwei Mikrowellenvorrichtungen geklemmt ist, wobei die Vorform als eine dielektrische Leitung wirkt.

7. Vorrichtung nach Anspruch 6, **dadurch gekenn-**

**zeichnet, daß** die Mikrowellenvorrichtungen Einrichtungen aufweisen, welche die Mikrowellenvorrichtungen zum Zwecke der Kopplung der Mikrowellen in der Vorform, welche als eine dielektrische Leitung wirkt, abwechselnd aktivieren.

8. Vorrichtung nach einem oder mehreren der Ansprüche 6 - 7, **dadurch gekennzeichnet, daß** der abgeschlossene Raum eine Einrichtung zum Drehen der Vorform aufweist.

9. Vorrichtung nach einem oder mehreren der Ansprüche 6 - 8, **dadurch gekennzeichnet, daß** die Mikrowellenvorrichtungen Einrichtungen zum Drehen des Polarisationsmode der Mikrowellen aufweisen.

10. Vorrichtung nach einem oder mehreren der vorhergehenden Ansprüche, **dadurch gekennzeichnet, daß** jede Mikrowellenvorrichtung ihre eigene getrennte Energiequelle hat.

**Revendications**

1. Procédé permettant de déposer une ou plusieurs couches de verre sur la surface externe d'une préforme de verre de type tige, lequel procédé comprend les opérations suivantes :

   i) placer la préforme dans un espace fermé,
   ii) créer une pression inférieure à la pression atmosphérique dans ledit espace fermé,
   iii) fournir un ou plusieurs gaz réactifs, qui peuvent être ou ne pas être dopés, dans l'espace fermé,
   iv) produire une zone de plasma dans ledit espace fermé, et
   v) laisser les gaz réactifs réagir entre eux dans la zone de plasma et laisser les produits de réaction se déposer sur la préforme de manière à ainsi former ladite ou lesdites couches de verre,

   **caractérisé en ce que** l'opération i) s'effectue par fixation de la préforme entre deux dispositifs à micro-ondes, la préforme faisant fonction de guide diélectrique, et par activation de ces dispositifs à micro-ondes de façon qu'une ou plusieurs couches de verre ayant une structure de couches concentriques soient formées sur la surface externe de la préforme selon l'opération v), où le diamètre de la préforme de verre de type tige obéit à l'équation suivante :

$$D > \frac{C_o}{1,706 * f * n_{avg}}$$

où :

C$_\mathrm{o}$ est la vitesse de la lumière (m/s),
n$_\mathrm{avg}$ est l'indice de réfraction moyen, et
$f$ est la fréquence des micro-ondes (s$^{-1}$).

2. Procédé selon la revendication 1, **caractérisé en ce que** les deux dispositifs à micro-ondes sont activés en alternance de façon à coupler les micro-ondes dans la préforme, laquelle préforme fait fonction de guide diélectrique.

3. Procédé selon l'une quelconque des revendications 1 et 2, **caractérisé en ce que** le dépôt des couches de verre selon l'opération v) s'effectue pendant que la préforme est en train de tourner.

4. Procédé selon l'une quelconque ou plusieurs des revendications précédentes, **caractérisé en ce que** le dépôt des couches de verre selon l'opération v) s'effectue quand une rotation du mode de polarisation des micro-ondes a lieu.

5. Procédé selon l'une quelconque ou plusieurs des revendications précédentes, **caractérisé en ce que** chaque dispositif à micro-ondes est connecté à une source d'énergie séparée.

6. Dispositif permettant de déposer une ou plusieurs couches de verre sur la surface externe d'une préforme de verre de type tige, lequel dispositif comprend un espace fermé, un moyen servant à créer une pression inférieure à la pression atmosphérique dans cet espace fermé, un moyen servant à fournir un ou plusieurs gaz réactifs, lesquels peuvent ou non être dopés, un moyen servant à fixer ladite préforme, un moyen servant à produire une zone de plasma, et des tubes habituels d'alimentation et de décharge, **caractérisé en ce que** le moyen de production d'une zone de plasma comprend deux dispositifs à micro-ondes et **en ce que** la préforme de type tige est serrée entre les deux dispositifs à micro-ondes se trouvant à l'une et l'autre extrémité, la préforme faisant fonction d'un guide diélectrique

7. Dispositif selon la revendication 6, **caractérisé en ce que** les dispositifs à micro-ondes comprennent des moyens qui activent les dispositifs à micro-ondes en alternance dans le but de coupler les micro-ondes dans la préforme, laquelle préforme fait fonction de guide diélectrique.

8. Dispositif selon l'une quelconque ou plusieurs des revendications 6-7, **caractérisé en ce que** l'espace fermé comprend un moyen permettant de faire tourner la préforme.

9. Dispositif selon l'une quelconque ou plusieurs des revendications 6 à 8, **caractérisé en ce que** les dispositifs à micro-ondes comprennent des moyens permettant de faire tourner le mode de polarisation des micro-ondes.

10. Dispositif selon l'une quelconque ou plusieurs des revendications précédentes, **caractérisé en ce que** chaque dispositif à micro-ondes possède sa propre source d'énergie séparée.